# EUROPEAN PATENT APPLICATION

(11) **EP 1 587 014 A1**
(43) Date of publication of application: **19.10.2005**
(21) Application number: 05008314.6
(22) Date of filing: 15.04.2005
(51) Int. Cl.: G06F 17/60

(54) **Method and system for using a camera cell phone in transactions**

(30) Priority: 16.04.2004 US 563211 P; 23.02.2005 US 64409
(71) Applicant: PITNEY BOWES INC., Stamford, CT 06926-0700 (US)
(72) Inventor: Das, Pradeep K., Bethel CT 06801 (US); Spencer, David W., Avon CT 06001 (US); Cordery, Robert A., Danbury CT 06811 (US); Ryan, Jr., Frederick A., Oxford CT 06478 (US)
(74) Representative: HOFFMANN EITLE

(57) **Abstract**

A method facilitating a transaction between a camera-phone user and a business entity. The business entity produces a printed medium indicating a transaction. The printed medium includes a barcode that includes direct contact data for communicating with the business entity. The barcode further includes specific transaction data relating to the transaction in the printed medium. Using the digital camera feature, the user captures a digital image of the barcode. The camera-phone is programmed to decode the digital image to retrieve the direct contact data and the transaction data embedded in the barcode. The camera-phone then automatically initiates a direct communication with the business entity via the mobile communications device using the decoded direct contact data. Once communications are established, the camera phone further transmits the transaction data derived from the barcode to further facilitate the transaction. The barcode includes an encrypted digital signature that can be used by the camera-phone to authenticate the identity of the business entity that created the printed medium.

## Description

This application claims priority of provisional United States Patent Application 60/563,211, filed April 16, 2004 and United States Patent. Application 11/064409, filed February 23, 2005, both having the same title as the present application.

The present invention relates generally to a method for initiating a transaction with a mobile communication device through an interaction with a printed media.

Mobile communication devices having digital camera capabilities are well known. One popular example of such a device is a cell phone equipped with a digital camera. Among other things, a cell phone user may spontaneously take a picture with the camera, and transmit the picture to another phone at a remote location.

In general, mobile phones are also recognized as opportunities for greater flexibility and spontaneity in business transactions. With a cell phone providing constant communications capabilities, a user can make a call from anywhere to initiate a business transaction at any time he or she has an impulse to do so.

The present invention advantageously combines the communications aspect of the cell phone with the camera-phone's digital imaging capabilities in a novel manner. This advantageous combination enables a user to spontaneously initiate a transaction with a business entity immediately upon viewing some printed material produced by the business entity. Numerous types of transactions can be enabled using the present invention.

The business entity first produces a printed medium indicating a transaction such as the sale of a product, or an offer for additional information. The printed medium includes a barcode that is embedded with direct contact data for communicating with the business entity, The barcode further includes specific transaction data relating to the transaction contemplated in the printed medium. The printed medium is then distributed for viewing by potential customers or users.

With the digital camera feature of a camera-phone, the user captures a digital image of the barcode. The camera-phone is programmed to decode the digital image to retrieve the direct contact data and the transaction data embedded in the barcode. The camera-phone then automatically initiates a communication with the business entity via the mobile communications device using the decoded direct contact data. Once communications are established, the camera phone transmits the transaction data derived from the barcode to further facilitate the transaction.

In one embodiment, the transaction data includes an identifier of a unique offer associated with the printed medium. Based on the identification of the offer, the business entity initiates the appropriate transaction routine for the communication. The unique offer transaction data may also include an identification of the particular medium from which the transaction data was retrieved. With this information, the business entity can track the source of its incoming communications for marketing analysis purposes.

In a preferred embodiment, the camera-phone further stores user information. Such user information can be transmitted by the camera phone to further facilitate the transaction. For example, a user's name, address, or account information can be stored in the phone's memory.

In the embodiment described above, the direct contact data is typically a phone number of the business entity, and the step of automatically contacting the business entity entails automatically dialing the decoded phone number derived from the barcode, Once contact is established, a human operator at the business entity may become part of the transaction, and the transaction may be carried out by voice communication. In one embodiment, the transaction is made more efficient by transmitting the stored user information from the camera phone to the business entity. As an alternative to a telephone transaction, a different embodiment may be used for World Wide Web transactions. In that embodiment, the direct contact information is a web address, and the communication device automatically contacts the web address after decoding the image of the barcode.

Once a transaction is started, the invention provides that an ongoing exchange of queries and responses may be used, depending on the nature of the transaction. Typically, the business entity will present a list of options, and the cell phone user can respond by transmitting an option selection.

In a preferred embodiment, prior to engaging in the transaction, the identity of the business entity is authenticated with a digital signature associated with the transaction. In a first arrangement, the digital signature may be included in the barcode and the step of decoding the digital image taken by the camera-phone includes decoding the digital signature. Authentication of the digital signature occurs prior to initiating the communication. Alternatively, the digital signature may not be in the barcode, but rather it may be transmitted to the mobile communications device from the business entity after initiation of the communication.

Preferably, the digital signature is generated using a private key and the step of authenticating the digital signature includes using a corresponding public key stored in the mobile communications device to verify the digital signature. If a valid digital signature is not authenticated then a warning may be provided, and the transaction may optionally be blocked. To facilitate tracking of potentially fraudulent activity, the authentication failure and corresponding data can be reported to a central authority.

Figure 1 depicts an embodiment of an overall system utilizing the present invention.

Figure 2 depicts an exemplary embodiment for providing product review information.

Figure 3 depicts an exemplary embodiment for a purchase transaction.

Figure 4 depicts an exemplary embodiment for a purchase transaction initiated from a companion publication.

Figure 5 depicts an exemplary embodiment for playing a promotional game.

Figure 6 depicts an exemplary embodiment for accessing an Internet web-site.

Figure 7 depicts an exemplary embodiment for playing a lottery game.

Figure 8 depicts an exemplary embodiment for accessing a movie preview.

Figure 9 depicts an exemplary embodiment for accessing a music clip.

Figure 10 depicts an exemplary embodiment for accessing competitive rate information.

Figure 11 depicts an exemplary embodiment for an automatic purchase transaction for a consumable item.

Figure 12 depicts an exemplary embodiment for using a cell phone as a point of sale.

Figure 13 depicts an exemplary embodiment for using a cell phone for tracking an item of mail.

Figure 14 depicts an exemplary embodiment for tracking individual items through a geographical area.

Figure 15 depicts an exemplary embodiment for completing a payment based on a transactional document.

Figure 16 depicts an exemplary embodiment for performing a survey.

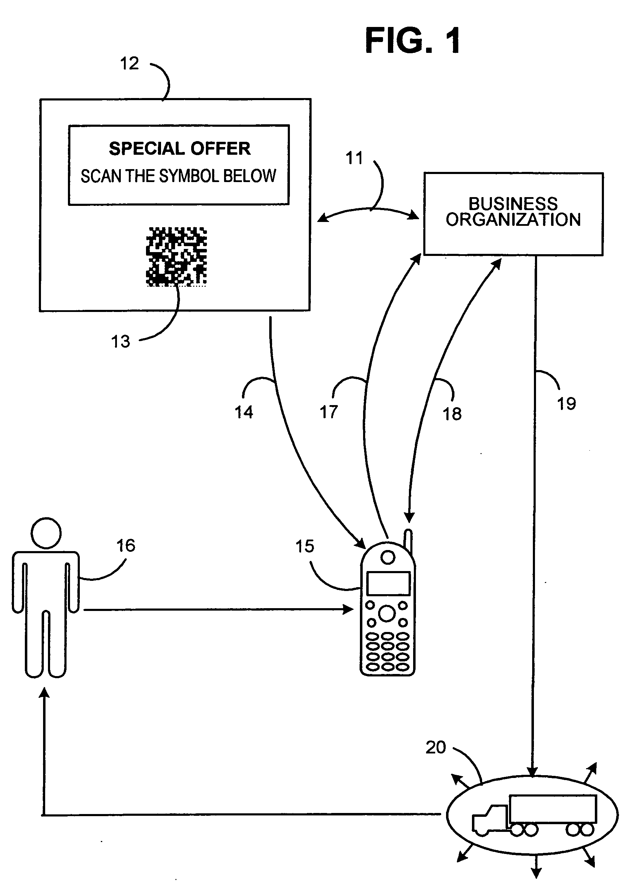

Figure 17 depicts an exemplary embodiment whereby digital signature security is provided by a trusted third party.
The invention described provides a method for executing business or personal transactions by using existing and available technology in a novel manner. The preferred method allows an individual to use a cell phone equipped with an integrated camera and associated software to initiate a business transaction. As depicted in Fig. 1, the user **16** starts the process by taking a picture (step **14)** of a one or two-dimensional bar code **13** published on a print medium **12.** This bar code **13** is then decoded by software embedded in the cell phone **15.**

In the preferred embodiment, the decoded bar code **13** includes a phone number to be dialed, and additional information pertaining to the transaction. Once the picture of the bar code 13 has been taken and the information decoded, the cell phone 15 automatically dials the embedded telephone number (step 17) contacting business organization **21.** Once communication is established, the cell phone 15 transmits the additional information to the receiving organization **21.** In addition to this information, supplemental information about the owner **16** of the cell phone **15,** including but not limited to name, address, or cell phone number, may also be transmitted. Such supplemental information is gathered from data stored in the cell phone **15.** This supplemental information allows the receiver to identify the caller and aids in completing the transaction.

At step **18,** the business organization **21** can transmit information or queries back to the cell phone **15,** and the user **16** may provide additional information, such as picking an option, or giving payment or confirmation instructions. In the depicted embodiment, in step **19,** the business organization **21** fulfills the transaction by having goods shipped to the customer **16** by a delivery service **20.**

In the preferred embodiment, the invention utilizes a software module included in the software suite supplied with cell phone **15**. Other exemplary software applications in the suite may include conventional voice-mail, text messaging, web access, etc. The software supporting the present invention has the capability of decoding a bar code. The software may include, but is not limited to, the capability to decode one or two dimensional bar codes such as Maxicode, Aztec, etc.

As mentioned above, a telephone number is preferably encoded in the barcode along with other information. Such other information may include, but is not limited to a product number, special offer code, or some other identifier. Other information may be provided depending on the needs of the creator of the barcode. Such information is preferably used to assist in fulfilling the contemplated transaction.

The software module for use with the present invention may utilize the following steps. A first step is decoding the bar code for its embedded information. If the picture is not of sufficient quality, the user may be prompted. If the information from the bar code is decoded correctly, the phone is automatically dialed to the number embedded in the bar code. Next, once the connection is made, the remaining information contained in the bar code is transmitted. The receiving organization then processes the request. Such request may include a buying transaction, fulfillment transaction, an information query transaction, etc. The receiving organization may then send a message or series of messages back to the phone for the holder of the cell phone to interact directly for such things as, but not limited to, paying options (credit card information, etc.), color of item, or other product and service choices. Alternatively, a live call center operator may come on the line to carry out the transaction with the caller, using the information already gathered.

In the preferred embodiment the bar code **13** will include both a unique code to identify the organization **21** and the telephone number to call. Additional information in the bar code **13** may include a unique identifier of the item or offer, product or service parameters unique to the offer, a code identifying the source of the bar code **13** (for example if the offer is made in more than one publication).

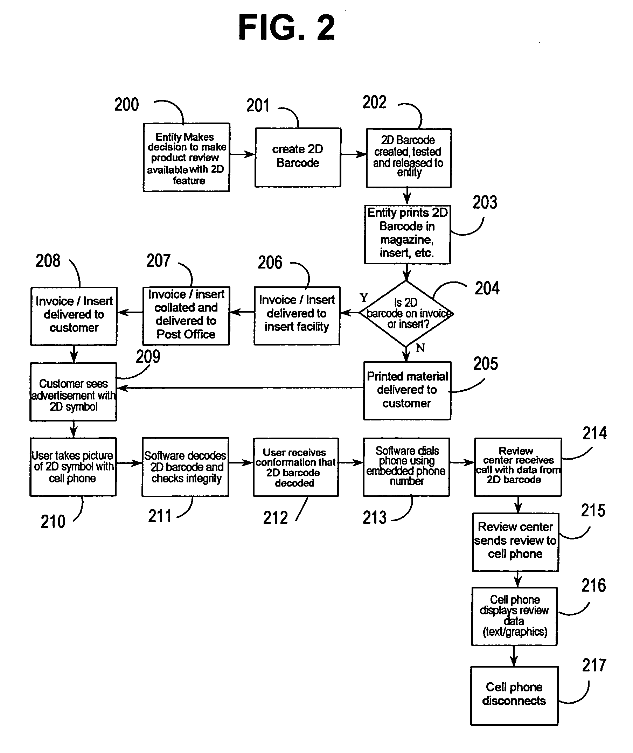

A number of other embodiments and applications utilizing features of the basic invention are described in flow diagrams in Figs. 2-14. Fig. 2 depicts a method of using a cell phone to look up product review information. For example, a printed medium advertisement might make a claim that the product advertised was rated better than competing products. A bar code is included with the advertisement that enables the viewer to access further information relating to the rating claim. In steps **200-217,** this method allows an individual to use a cell phone equipped with an integrated camera and associated software, to initiate such a query transaction. In steps **200-208** the printed material including the bar code is created. In steps **209** **210**, the user initiates the process by taking a picture of a two-dimensional bar code published in a print medium. This bar code is then decoded by software embedded in the cell phone (steps **211, 212**). The bar code contains, but is not limited to, the number to be dialed and additional information pertaining to the transaction. Upon decoding of the barcode, the cell phone automatically dials the embedded telephone number, and transmits the information to the company with the query database (steps **213, 214).** The information transmitted contains but is not limited to the information encoded in the barcode, and information pertaining to the individual phone initiating the call. In steps **215, 216** the review center transmits the rating and review information to the cell phone, where it is displayed on the cell phone screen. Upon completion of the transaction, the cell phone disconnects (step **217**).

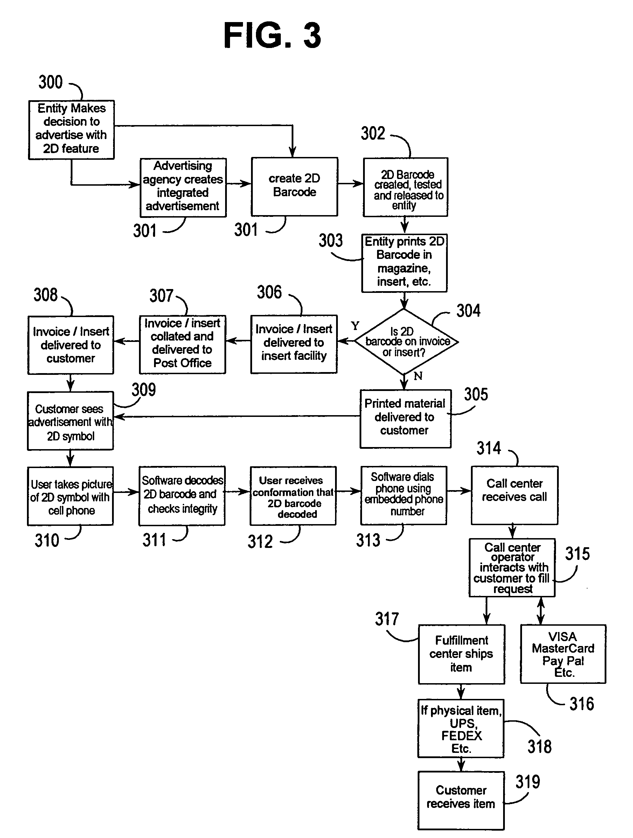

Fig. 3 depicts more details of a process for a purchase transaction through a call center, comparable to what was described in connection with Fig. 1. Steps **300-319** of this method allow an individual to use a cell phone equipped with an integrated camera and associated software to initiate a fulfillment transaction. In steps 300-308. the printed material and barcode are created. In this case the printed material may typically be an advertisement. In steps **309, 310** the user initiates the process by taking a picture of a two-dimensional bar code published in the print medium. This bar code is then decoded by software embedded in the cell phone (steps **311, 312).** The bar code contains, but is not limited to, the number to be dialed and additional information pertaining to the transaction. Upon decoding of the barcode, the cell phone automatically dials the embedded telephone number, connecting the customer with a traditional call center (steps **313-315).** The call center personnel and the customer complete the transaction and fulfillment of the purchase is carried out (steps **316-319).**

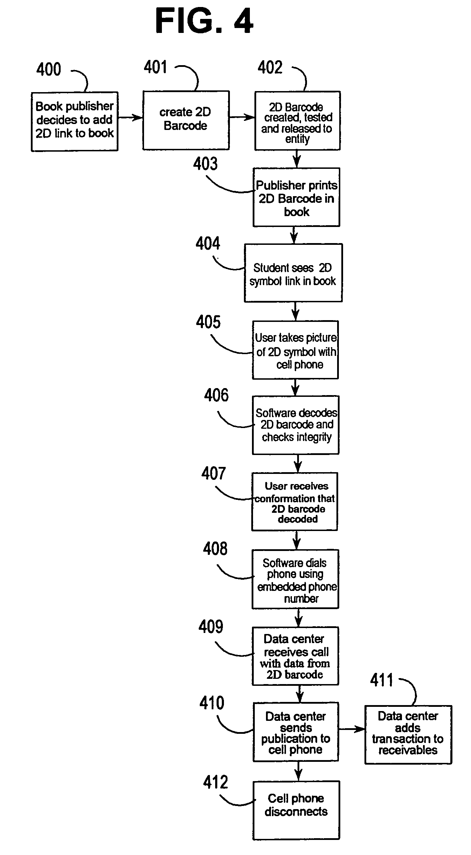

In Fig. 4, steps **400-412** depict a method of using cell phone to initiate purchase of a companion publication. Often a book may include a bibliography or footnotes that may be of interest to a reader wishing more information on a subject. For such references that the book publisher can provide to the reader, this method provides an easy way to quickly order the related publication. In steps **400-403,** the publisher provides the bar code links for the companion publications in the book. The user initiates the process by taking a picture of a two-dimensional bar code published in a print medium (steps **405, 405).** This bar code is then decoded by software embedded in the cell phone **(406-408).** The bar code contains but is not limited to the number to be dialed and additional information pertaining to the transaction. Upon decoding of the barcode, the cell phone automatically dials the embedded telephone number, and transmits the information receiving fulfillment organization, particularly including the identification of the desired companion publication (steps **408, 409).** In one embodiment, the companion publication may be sent directly to the cell phone (step **410).** Alternatively, delivery of a hardcopy version of the publication may be initiated.

Preferably, the publishing entity processes the information and sends back a message to confirm the transaction is valid and has started. Through a series of messages between the cell phone and the fulfillment entity, messages, options, and menus of options may be displayed on the cell phone for the customer to answer. The types of information asked for could include but is not limited to type of document. The customer interacts with these questions / menus, and the answers are communicated back to the fulfillment entity.

The method of payment may be addressed by several methods. The first method will handle payment through queries displayed on the cell phone. This may involve the customer entering in a valid charge card number and related information. This information is then verified by the fulfillment entity in direct communications with the charge-card company or bank. The second method requires that the customer has previously set up a payment scheme with the telecommunications operator. In this scheme, the fulfillment entity defers to the telecommunications operator to manage the payment. The telecommunications operator may handle the payment within its organization or initiate a transaction on a pre-determined charge or bank number. Upon completion of all questions required to complete the transaction, the purchased publication is downloaded to the cell phone, and the cell phone is disconnected. The fulfillment agency then enters the transaction into its database for billing. These payment options are applicable to any of the transactions described in this application.

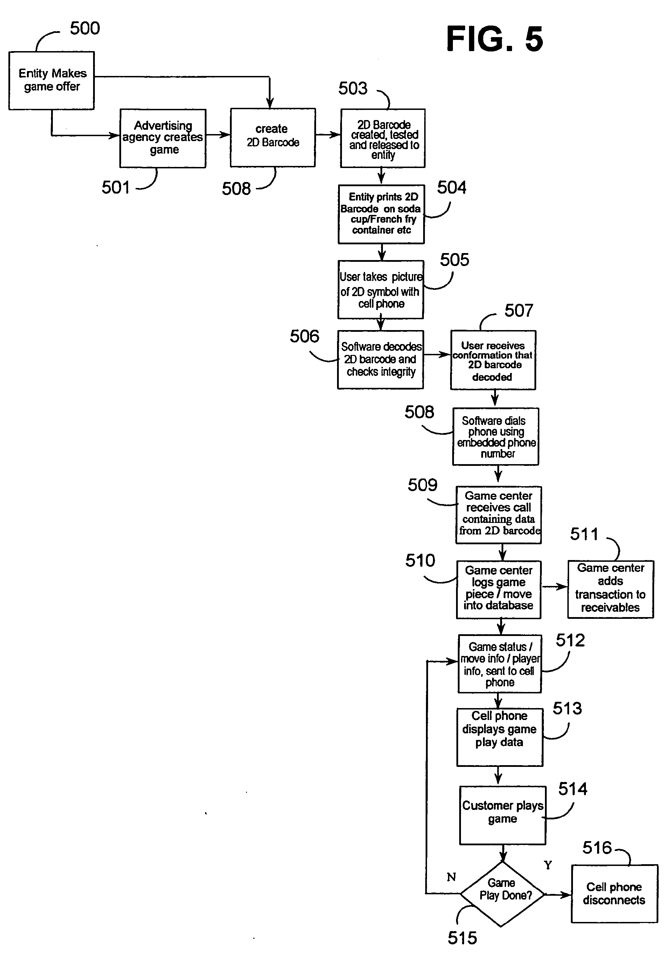

Fig. 5 depicts a method of using a cell phone to play a game. Steps **500-516** describe a way to allow game promotions by fast food restaurants, radio stations, direct mail campaigns, etc. This method allows an individual to use a cell phone equipped with an integrated camera and associated software, to initiate a game transaction. In steps **500-504,** the game entity creates a medium, for example a soda cup, having a bar code printed on it. In step **505,** the user initiates the process by taking a picture of a two-dimensional bar code published in the print medium. This bar code is then decoded by software embedded in the cell phone (steps 506, 507). The bar code contains, but is not limited to, the number to be dialed and additional information pertaining to the transaction. Upon decoding of the barcode, the cell phone automatically dials the embedded telephone number, and transmits the information to the game organization (steps **508, 509).** The information transmitted may contain, but is not limited to, the information encoded in the barcode and information pertaining to the individual phone initiating the call.

The game entity then processes the information and sends back a message or series of messages according to the game play (steps **510-515).** Once the game turn is over, a confirmation message is sent to the cell phone, which is then disconnected (step **516).**

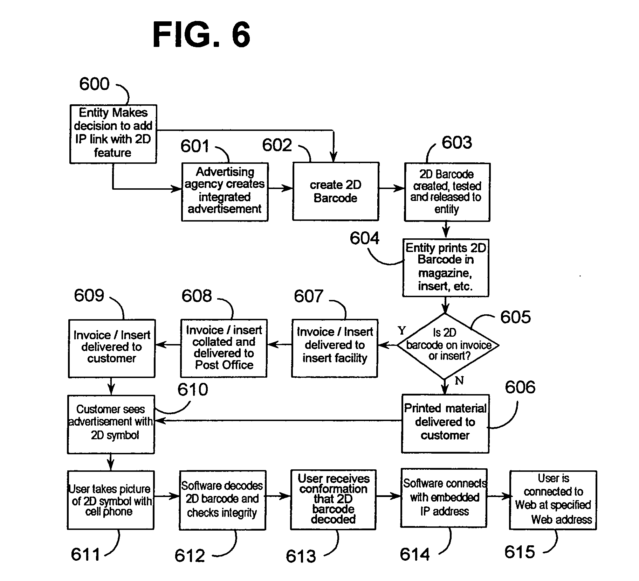

Fig. 6 depicts an alternate embodiment for using a cell phone to automatically initiate a connection to an Internet site. Steps **600-615** describe steps to allow an individual to use a cell phone equipped with an integrated camera and associated software, to initiate a connection to a web site on the cell phone. Steps **600-609** describe the creation of the print medium and associated bar code. At steps **610, 611,** the cell phone user initiates the process by taking a picture of a two-dimensional bar code published in the print medium. This bar code is then decoded by software embedded in the cell phone (steps **612, 613).** The bar code contains but is not limited to the IP address, or URL, to be connected to. Upon decoding of the barcode, the cell phone automatically connects the internet-enabled phone with the specified Internet site (steps **614, 615).**

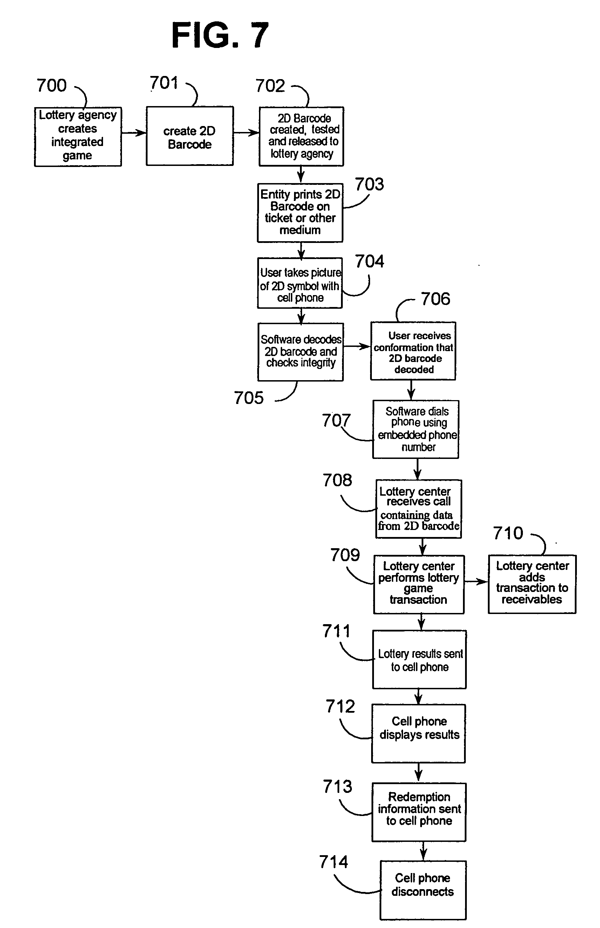

Fig. 7 depicts a method of using a cell phone to automatically initiate an instant lottery game play (in contrast to the promotional type game of Fig. 5). Steps **700-714** allow an individual to use a cell phone equipped with an integrated camera and associated software to initiate a lottery transaction. In steps **700-703**, the lottery authority creates a lottery ticket having a bar code printed on it. At step 704, the user initiates the process by taking a picture of a two-dimensional bar code published on the ticket. This bar code is then decoded by software embedded in the cell phone (steps **705, 706**). The bar code contains, but is not limited to, the number to be dialed and additional information pertaining to the game ticket. Upon decoding of the barcode, the cell phone automatically dials the embedded telephone number, and transmits the information to the lottery organization (steps **707, 708).** The information transmitted contains but is not limited to the information encoded in the barcode and information pertaining to the individual phone initiating the call.

The lottery organization then processes the information and sends back a message or series of messages according to the game play (steps **709-713).** Once the game turn is over, a confirmation message is sent to the cell phone. This information can include but is not limited to where winnings can be claimed. The cell phone is then disconnected (step **714**). This method allows interactive games to be played based on time or the number of active participants.

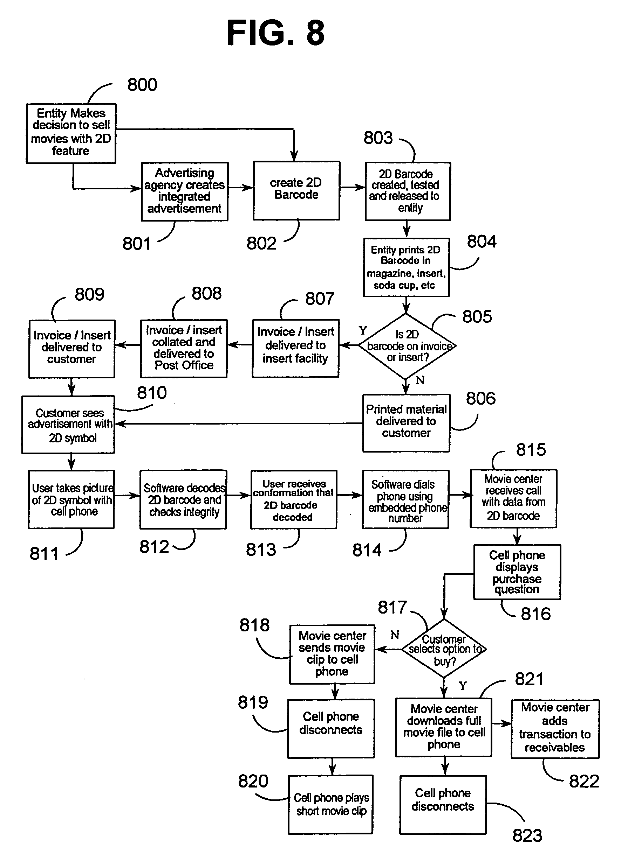

Figure 8 depicts a method of using cell phone to automatically download a movie clip with option to buy. Steps **800-823** provide a method for a customer to use his/her cell phone to view a promoted movie trailer, and optionally to buy the full movie. This also has the benefit of allowing the customer to easily try multiple trailers in a convenient fashion. This method allows an individual to use a cell phone equipped with an integrated camera and associated software, to initiate a fulfillment transaction. Steps **800-809** describe steps for creating the printed medium and associated bar code for the movie promotion. At step **810-811,** the user initiates the process by taking a picture of a two-dimensional bar code published in a print medium. This bar code is then decoded by software embedded in the cell phone (steps **812, 813**). The bar code contains, but is not limited to, the number to be dialed and additional information pertaining to the transaction. Upon decoding of the barcode, the cell phone automatically dials the embedded telephone number, and transmits the information to the movie fulfillment organization (steps **814, 815**). The information transmitted contains but is not limited to the information encoded in the barcode and information pertaining to the individual phone initiating the call.

The movie fulfillment entity then processes the information and sends back a question if the customer wants a limited clip of the specified movie or to buy the movie (steps **815-817).** If the customer wants a limited time clip, it is sent back to the customer and the phone disconnects (steps **818-820).** If the customer wants the entire movie, it is sent and the transaction is entered into the receivables system of the movie fulfillment entity (steps **821-823**). Movie offers can be printed on soda cups or cans, French fry containers, tickets, etc.

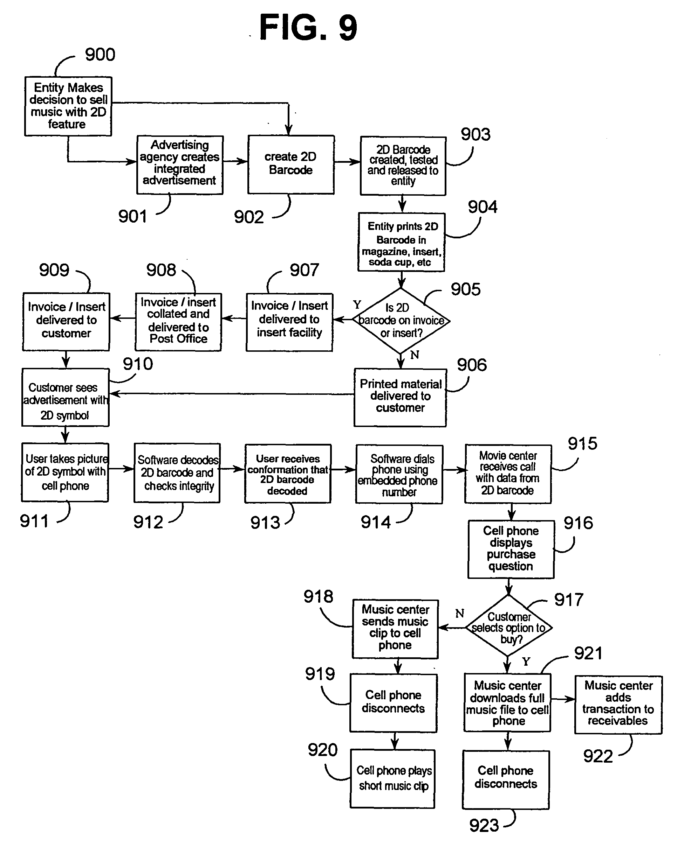

Similar to Fig. 8, steps **900-923** of Fig. 9 depict a transaction for downloading music, instead of movies. These steps allow the customer to use his/her cell phone to try a promoted piece of music and optionally buy the full piece. This also has the benefit of allowing the customer to easily try multiple pieces of music in a seamless convenient fashion.

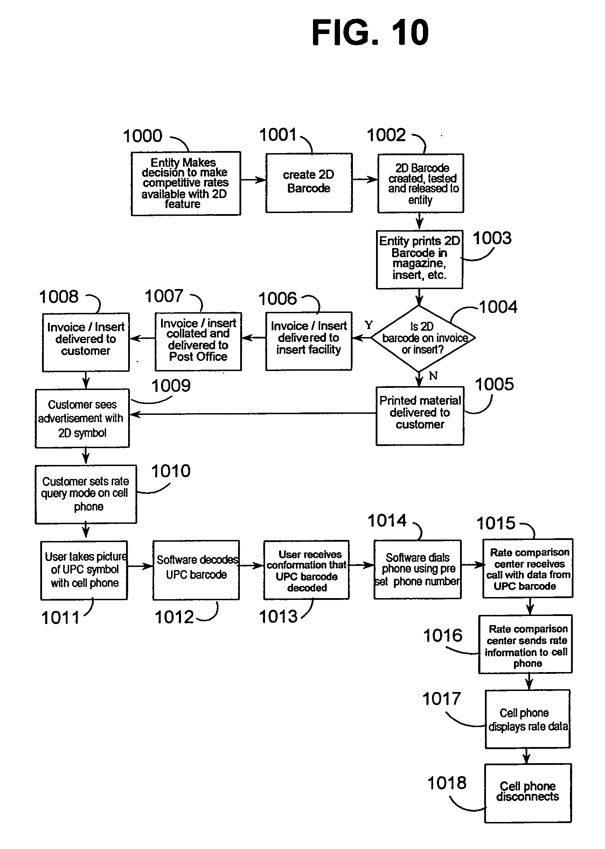

Fig. 10 depicts an alternative embodiment of a method of using cell phone to automatically lookup competitive rate information. Steps **1000-1018** provide a method for retrieving a rate comparison on the cell phone using existing UPC markings already existing on a product. This method allows an individual to use a cell phone equipped with an integrated camera and associated software, to initiate a rate query transaction. In step **1000,** an entity gathers competitive rate information for a variety of products. In steps **1001-1008,** a UPC bar code for a given product is published on a printed medium. The user initiates the process by setting the cell phone in the mode for making rate queries, and then taking a picture of the UPC bar on the item in question (steps **1009-1011**). The UPC bar code is then decoded by software embedded in the cell phone (steps **1012, 1013**). Upon decoding of the barcode, the cell phone automatically dials a pre-set telephone number, and transmits the information to the company with the query database (steps **1014, 1015).** The information transmitted may contain, but is not limited to, the information encoded in the barcode, and information pertaining to the individual phone initiating the call. The query database then processes the rate request and sends back the requested information (steps **1016, 1017).** Included in the returned information may be advertising material.

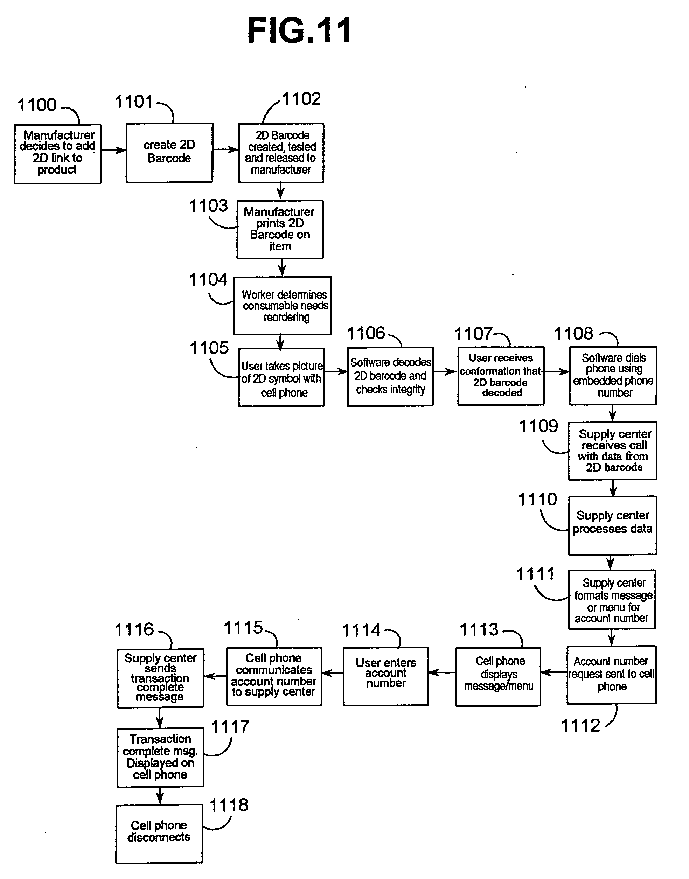

Fig. 11 depicts a method of using cell phone to automatically initiate a purchase transaction for a consumable item. Steps **1100-1118** of this method allow an individual to use a cell phone equipped with an integrated camera and associated software, to initiate a fulfillment transaction for consumable items. In steps **1100-1103,** a manufacturer prints a specialized bar code in accordance with this invention on a consumable item. When a user realizes that new consumable items are needed, the user initiates the process by taking a picture of a two-dimensional bar code published in a print medium on the product or the product packaging (steps **1104, 1105**). This bar code is then decoded by software embedded in the cell phone (steps **1106, 1107**). The bar code contains, but is not limited to, the number to be dialed and additional information pertaining to the transaction. Upon decoding of the barcode, the cell phone automatically dials the embedded telephone number, and transmits the information receiving fulfillment organization (steps **1108, 1109**). The information transmitted may contain, but is not limited to, the information encoded in the barcode and information pertaining to the individual phone initiating the call.

The fulfillment entity then processes the information and sends back a message to confirm the transaction is valid and has started (steps **1110, 1111).** The cell phone asks for the account number (and possibly password) of the customer, and this information is sent to the fulfillment entity (steps **1112-1115).** The fulfillment entity then completes the transaction by entering the data into its order system, a confirmation message is sent to the cell phone, and the cell phone is disconnected (steps **1116-1118).**

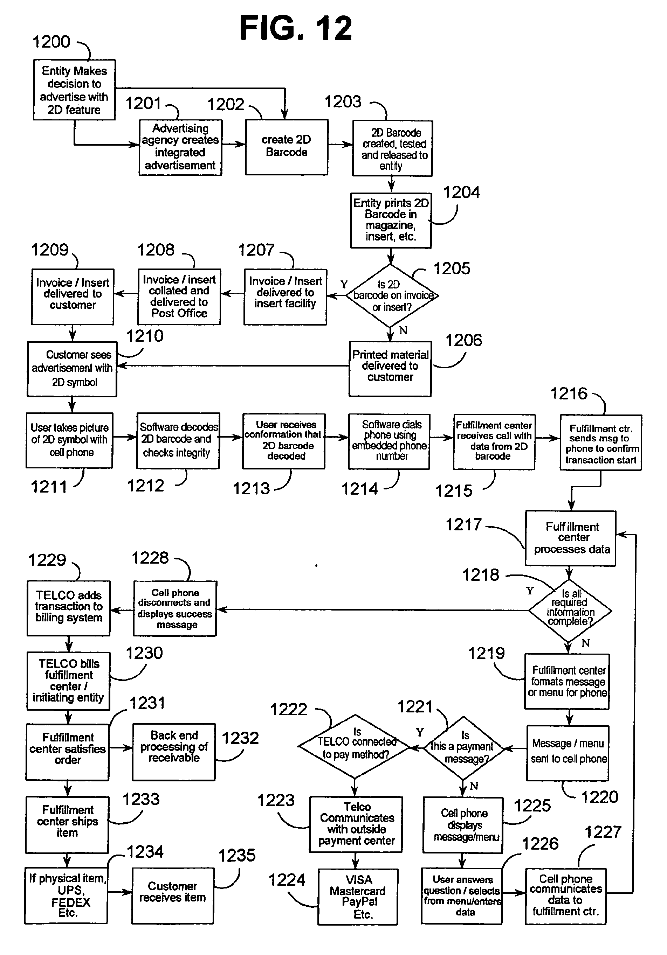

Fig. 12 depicts a detailed embodiment for using a cell phone as a point of sale. Steps **1200-1235** allow an individual to use a cell phone equipped with an integrated camera and associated software, to initiate a fulfillment transaction. In steps **1200-1209** an entity creates a printed medium including the bar code for the intended transaction. At steps **1210, 1211,** the user initiates the process by taking a picture of a two-dimensional bar code published in a print medium. This bar code is then decoded by software embedded in the cell phone (step **1212, 1213).** The bar code contains, but is not limited to the number to, be dialed and additional information pertaining to the transaction. Upon decoding of the barcode, the cell phone automatically dials the embedded telephone number, and transmits the information to the receiving fulfillment organization (steps **1214, 1215**). The information transmitted contains but is not limited to the information encoded in the barcode and information pertaining to the individual phone initiating the call.

The fulfillment entity then processes the information and sends back a message to confirm the transaction is valid and has started (step **1216).** Through a series of messages between the cell phone and the fulfillment entity, messages, options, and menus of options are displayed on the cell phone for the customer to answer (steps **1217-1221, 1225-1227**). The types of information asked for could include but is not limited to color, size, shipment options etc. The customer interacts with these questions or menus, and the answers are communicated back to the fulfillment entity.

The method of payment may be addressed by several methods. The first method (steps **1221-1224**) will simply look like another question displayed on the cell phone. This may involve the customer entering in a valid charge card number and related information. This information is then verified by the fulfillment entity in direct communications with the charge-card company or bank.

The second method (steps **1228-1230**) requires that the customer has previously set up a payment scheme with the telecommunications operator. In this scheme, the fulfillment entity defers to the telecommunications operator to manage the payment. The telecommunications operator may handle the payment within its organization or initiate a transaction on a pre-determined charge or bank number,

Upon completion of all questions required to complete the transaction, the cell phone notifies the customer that the transaction has been completed, and breaks the connection with the fulfillment entity. The fulfillment agency then enters the transaction into its database for normal fulfillment of the order including shipment (steps **1230-1235).**

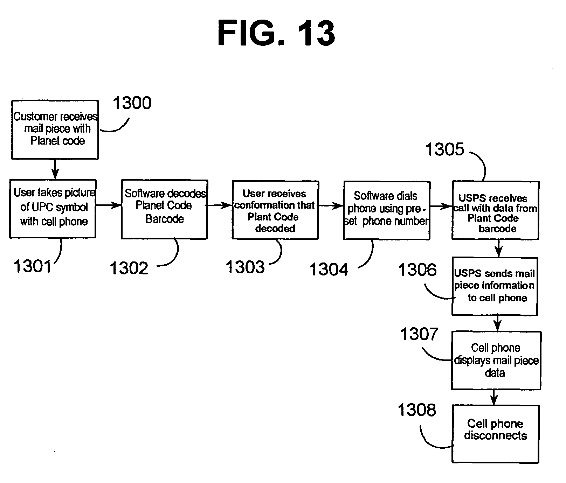

Fig. 13 depicts an embodiment for using a cell phone to query mail piece information using Planet Code information printed on the mail piece. Steps **1300-1308** of this method allows an individual to use a cell phone equipped with an integrated camera and associated software to initiate a query of the information about a mail piece. At steps **1300-1301,** the user initiates the process by taking a picture of the Planet Code on the mail piece in question. The Planet Code is then decoded by software embedded in the cell phone (step **1302, 1303**). Upon decoding of the barcode, the cell phone automatically dials a pre-set telephone number connect it with a Planet Code database, such as the one owned and maintained by the United States Postal Service (step **1304, 1305**). The query database then processes the request and sends back the postal information pertaining to that mail piece (steps **1306, 1307).** Alternatively, to Planet Code data, other types of tracking information may be scanned in connection with mail pieces. Other tracking data may include information based indicia (IBI) in the postage meter mark, or USPS delivery confirmation data.

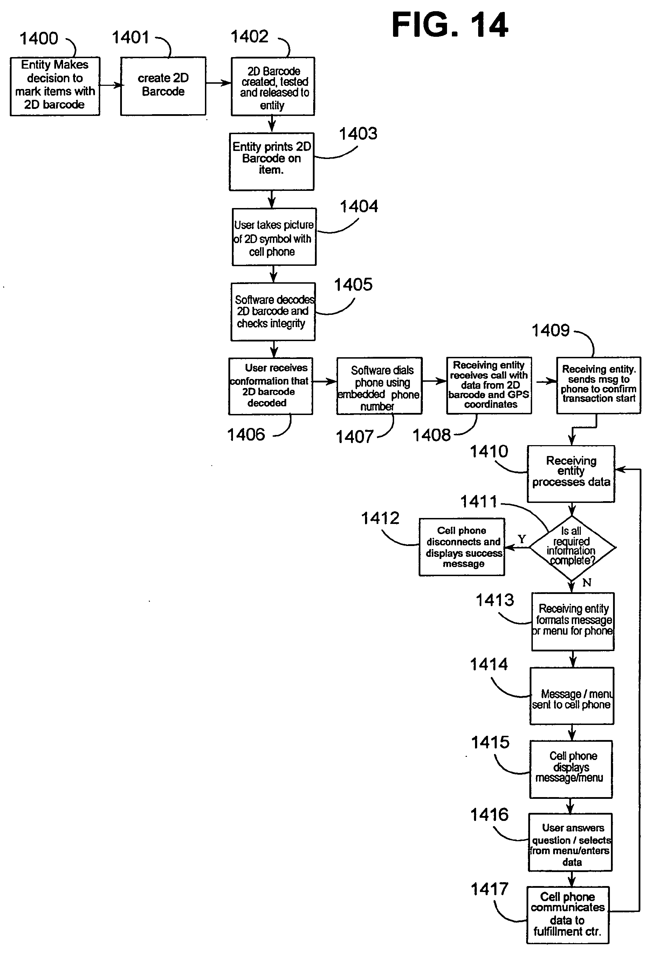

Fig. 14 depicts a method of using a cell phone to track individual items through a geographical area using a two-dimensional bar code. Steps **1400-1417** allow an individual or company to keep track of mobile assets. This method allows an individual to use a cell phone equipped with an integrated camera and associated software, to initiate an item-location transaction. In steps **1400-1403**, an entity imprints a bar code on an item. A cell phone user initiates the process by taking a picture of a two-dimensional bar code published in a print medium (step **1404**). This bar code is then decoded by software embedded in the cell phone (step **1405, 1408).** The bar code contains, but is not limited to, the number to be dialed and additional information pertaining to the transaction. Upon decoding of the barcode, the cell phone automatically dials the embedded telephone number, and transmits the information decoded from the barcode (step **1407).** The information transmitted may contain, but is not limited to, the information encoded in the barcode and information pertaining to the individual phone initiating the call and the GPS coordinates of the cell phone taking the picture. The information may also include an identification of who mailed the mailpiece, when it was marked, and when a response is requested.

The receiving entity then processes the information and sends back a message to confirm the transaction has started (step **1408, 1409**). Through an optional series of messages between the cell phone and the receiving entity, messages, options, and menus of options are displayed on the cell phone for the user to answer (steps **1413-1417).** The information asked for is dependent upon the type of entity using the technology. The individual interacts with these questions /menus, and the answers are communicated back to the receiving entity. When the questions are complete, the cell phone hangs up and the transaction is complete (step **1412).**

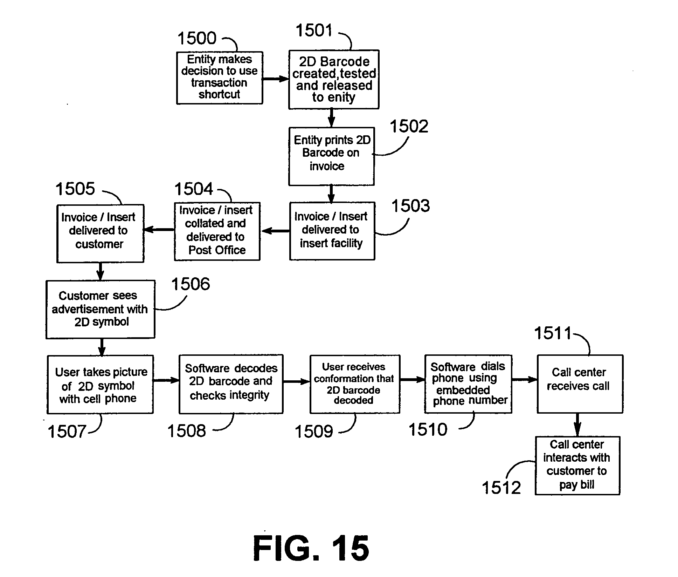

Figure 15 depicts a method for completing payment on a transactional document. In steps **1500-1502,** an entity imprints a bar code on an invoice. The invoice indicates a payment due from the customer to the entity. In steps **1503-1505,** the invoice is enclosed in a mailpiece and delivered to the customer. Upon receipt and review of the invoice **(1506)**, the customer initiates a payment process by taking a picture of a two-dimensional bar code published in a print medium (step **1507).** This bar code is then decoded by software embedded in the cell phone (step **1508, 1509).** The bar code contains, but is not limited to, the number to be dialed and additional information pertaining to the transaction. Upon decoding of the barcode, the cell phone automatically dials the embedded telephone number, and transmits the information decoded from the barcode (step **1510**). The information may include an identification of the invoice account and the amount of payment that is due. Alternatively, this exemplary embodiment may be used to process a warranty registration by scanning a barcode on a warranty document and transmitting the registration information to business entity.

The receiving entity then processes the information and sends back a message to confirm the transaction has started (step **1511).** If the call center is automated, an optional series of messages is exchanged between the cell phone and a call center of the receiving entity. Messages, options, and menus of options are displayed on the cell phone for the user to answer (step **1512).** A live customer service representative may typically be involved in taking the payment information, and completes the payment transaction with the customer in conventional fashion.

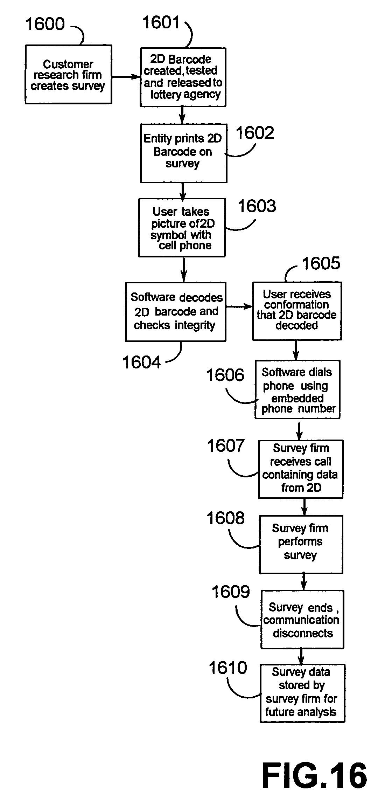

In a further embodiment depicted in Figure 16, the present invention may be used to initiate a survey. At step 1600, a survey is created. A 2D barcode is included on printed matter delivered to a consumer **(1661-1602).** The consumer decides to participate in the survey and scans the barcode with the camera phone **(1603).** Based on the phone number, or web information, included in the barcode, contact is made with a survey firm that asks a series of survey questions (**1604-1607**). The survey may be automated, and may ask the consumer questions either through an audio, or on-screen interface **(1608).** Alternatively, the consumer may be connected to a live survey taker. After the survey is complete, the communication is terminated and the survey firm's records are updated **(1609-1610).**

In an enhanced embodiment, the consumer maybe provided incentives to participate in the survey. Since the participant may be identified by his or her cell phone account, the phone provider may participate in providing incentive rewards. For example, as a reward for participating, the consumer's cell phone account may be credited with free minutes, redeemable points, or discounts.

### Data Format

The following listing describes a preferred embodiment of the contents and format of the data encoded within the printed 2D symbol for use with the present invention. Alternative formats might include UPC symbols, USPS IBI or delivery confirmation codes, depending on the actions that are to be performed in accordance with one of the applications described above.

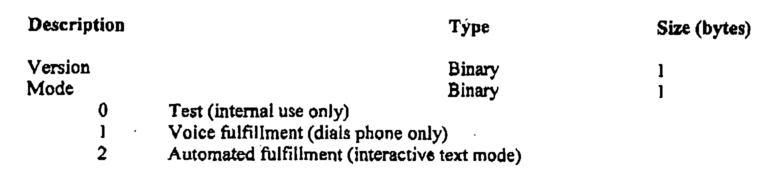

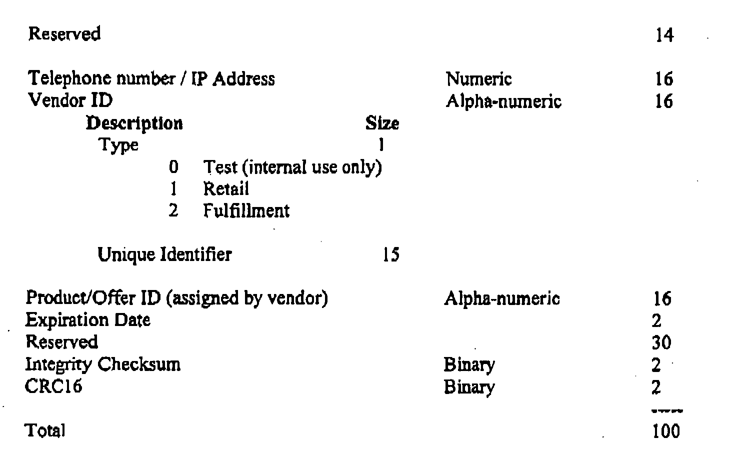

The following describes a preferred embodiment of the packet protocol to be used to communicated between the cell phone **15** and the business organization **21:**

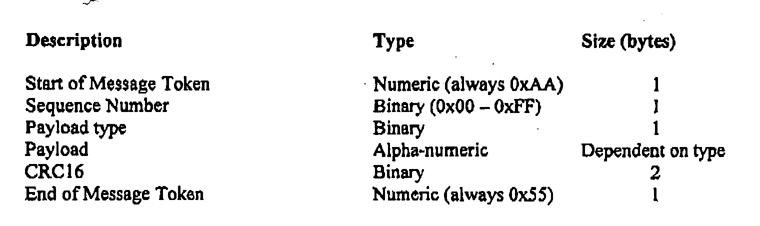

### Start of Message Token

This value is always 0xAA and marks the beginning of a new message

### Sequence Number

This value is a sequence number, starting at 0x00 and incrementing by I for each subsequent message, rolling over to 0x00 after the value 0xFF. This is used to insure message level integrity, especially important when the desired payload is larger than the maximum payload allowed by a single message.

### Payload Type

This value defines the type of payload carried by this message. In addition, the payload type defines the total length of the payload, and thus the total length of the message.

| | |
|---|---|
| 0x00 | Reserved |
| Ox01 | Initial Massage |
| 0x02 | On-The-Fly Menu definition |
| 0x03 | Menu response |
| 0x04 | Continuation of previous payload |
| 0x05 | Raw binary data |
| 0x06 | Payment arranged by TELCO |
| 0x07-0xEF | Future payload type identifiers |
| 0xF0-0xFF | Reserved |

### Payload

Dependant upon payload type

### CRC16

Cyclical Redundancy Check value (16 bit)

### End of Message Token

This value is always 0x55 and marks the end of the message

### Initial Message

The first message sent from the cell phone **15** to the organization **21** (Payload Type 1) contains:

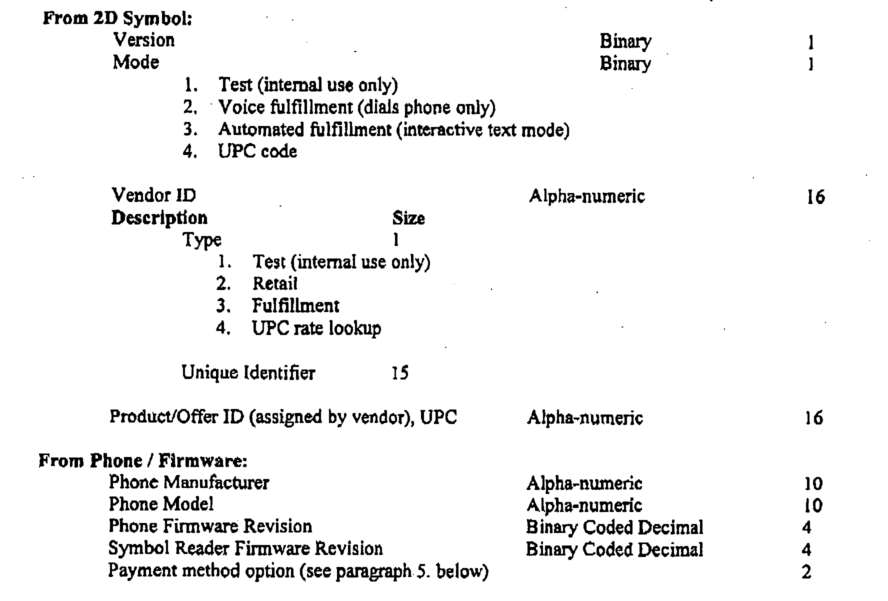

### Protocol for Menus-On-The-Fly

In order to query the cell-phone **15** for items such as product options (color, size etc), shipping, billing options, and other required information, this protocol within the message structure allows the fulfilling entity (business organization **21**) to build a text or graphic menu to be displayed on the cell phone display, Upon sending the required information to the cell phone **15,** the cell phone software is then responsible for displaying the menu (which could be a simple one text line (and / or graphic) display, capturing the resultant user **16** response, and sending the response back to the fulfilling vendor **21.**

Within the payload data are embedded commands for formatting and displaying the menu item(s), as well as the data (text and/or graphical) to support the query. These embedded commands control defined functionality implemented on the cell phone **15**. Because the capability of each cell phone depends upon the manufacturer and features selected by the user, it is known in the art that this finite set of functions with fixed API's may implement the commands differently for each type of phone while still performing the basic task defined by the protocol.

### Payment Method

In many of the embodiments depicted in Figs. 2-14, it may be convenient for the payment method to be established ahead of any particular purchase. Once such exemplary method is for the telephone company (TELCO) provider to be used as the gateway into one or more payment methods. This arrangement is made between the user **16** of the cell phone **15** and the TELCO provider. This arrangement may be as simple as the TELCO provider storing credit card or bank account numbers to be accessed when a purchase is made. In this case, the TELCO is simply a broker between the customer **16,** the fulfillment entity **21,** and the credit card agency or bank. If this arrangement is established, the fulfillment entity **21** is informed during the initial message from the cell phone, and when payment terms are required by the fulfillment entity, control is passed back to the cell phone **15** and a process controlled by the TELCO is implemented to complete the payment details. Passing of control from the fulfillment agency back to the TELCO is achieved by a unique payload message type as described in the protocols above.

### Security Features

In the preferred embodiments, security features are incorporated into the invention. A first optional security feature allows use of the camera phone for initiating transactions to be restricted without entry of a proper PIN or password. When a transaction is initiated by scanning a barcode with a camera phone, the user is required to enter a PIN on the camera-phone before being allowed to proceed.

In an alternative embodiment, different types of transactions may have different security levels. PIN or password requirements are preferably stored in the camera phone. The security levels may be triggered by information about the nature of transaction, as identified by information embedded in the bar code. For example, toll calls might require PIN entry, while toll-free will not. In another example, calls where money is being transacted may require a PIN, while informational calls may not.

PINs and passwords can prevent unauthorized transactions if the phone is stolen. Also if the phone is given to a child the use of PINs and passwords can allow a parent to control the types of transactions that are allowed. The PIN and password functionality is programmed directly into the camera cell phone, and the need for a proper PIN will be triggered based on Information decoded from the barcode, or from information transmitted to the cell phone from the business entity.

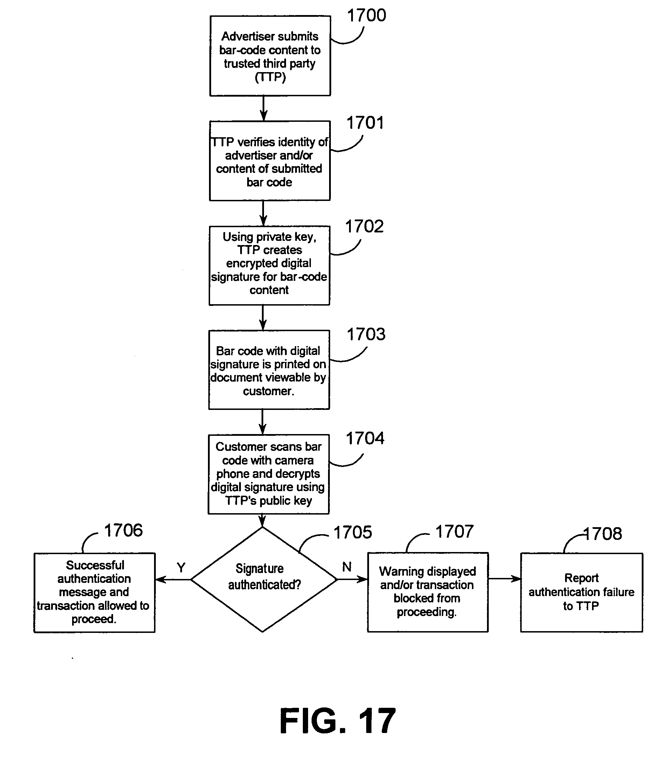

Another preferred security feature uses digital signatures to verify that the entity who produces the printed material is the entity that it claims to be. Consumers may be hesitant in using their camera phones to initiate automatic transactions out of concern that the bar-codes may be counterfeit or misrepresenting the identity of the author. An exemplary authentication procedure is depicted in the flow diagram of Figure 17.

In this exemplary embodiment, a trusted third party (TTP) will verify the identity of the entity publishing the bar code. At step **1700** the entity (for example an advertiser) submits data to be included in the bar-code to the TTP. The TTP can verify the identity of the entity and/or the content (Step **1701)**. For example, the TTP can verify that a phone number is correct and valid for the entity. At step **1702,** the TTP then uses a private key to provide a digital signature to be included in the bar code. The bar code with the digital signature is then printed on the document which is to be presented to potential customers.

Camera phones for use with the present invention include a public encryption key provided by the TTP. This public key corresponds to the private key used to generate the digital signature. Thus, by systematically using the TTP to maintain control over the public and private encryption keys, the entity creating the bar code can be identified and held accountable. At step **1704,** the digital signature is verified by the camera phone using the public key. The camera phone then ascertains the bar code content is authentic based on whether verification of the digital signature **(1706)** was successful.

The user may be informed by a message whether the bar code was authenticated (**1706-1707**). In a preferred embodiment, the cell phone may be programmed with a preference to disallow any transactions from proceeding, unless an authenticated signature is found **(1707),** Since information in the bar codes may become outdated, date information may be included in the bar code, and a warning may be produced if the information is older than a predetermined expiration period. Transactions may also be blocked for expired bar codes.

An alternative to the digital signature scheme described above could be for a certificate to be downloaded during the transaction. The certificate includes a vendor key and a TTP signature authenticating that the vendor key is from an authentic source. These and other techniques for authenticating the source of a message are well known in the encryption arts.

In a further embodiment, if a non-authentic or otherwise suspicious bar code is detected, the camera phone can automatically, or upon user command, store and upload information about a suspicious bar code to a central repository for further action and analysis **(1708).** Preferably, the TTP could access the information about bad bar codes in order to make future determinations about bar code verification.

In a particular application of the digital signature security as described above, a consumer can verify the source of quality or rating information printed on a product package or an advertisement (for example, as shown in Fig. 2). Packages and advertisements will often include a quality rating, a seal of approval, or the like. (Example, Consumer Reports rating, Underwriters Laboratory, JD Powers, etc.). Bar codes are included with these ratings that include a digital signature to verify authenticity.

A trusted third party (TTP) verifies the identity of the entity publishing the bar code. The TTP may also verify bar code content, such as the product and its rating information. The TTP then uses a private key to provide a digital signature to be included in the bar code. Camera phones are manufactured to include the corresponding public key. The digital signature is read by the camera phone using the public key. The ability of the camera phone to read the digital signature verifies the authenticity of the code.

An alternative authentication technique would require the cell-phone to dial a phone number included in the bar code. This phone number could be a direct contact number for the rating agency. Once communication is established, a certificate can be downloaded to the cell phone. The certificate includes a vendor key and a TTP signature authenticating that the rating agency key is from an authentic source. The rating agency key could then be used to authenticate rating information generated by the rating agency.

### Exemplary software

The following exemplary software code demonstrates the operation of the present invention. This provided exemplary code is in Visual Basic programming language, but any suitable programming language may be used, and it is to be understood that the software may be organized in many different ways without departing from the invention.

The following exemplary files are presented below: Form1.frm, Form2.frm, Project1.vbp, and Project1.vbw. These files are used to generate an executable file called CellPhoneConnector.exe that will operate on a camera phone device to interpret scanned data, provide a user interface, and to open a line of communication, and to initiate a transaction. It will be understood that certain other routine files are not presented below but would be easily understood and implemented by those skilled in the art.

For this exemplary embodiment, the software is capable of interpreting the bar-code information to determine whether communication will be by telephone or web. The software then dials the phone number, or contacts the appropriate web address, as the case may be, to initiate the transaction,

The Form1 and Form2 files describe the screen interfaces, the communication means, and the logic for interpreting the bar-codes and initiating transactions. The Project1 files bring together the Form1, Form2, and other necessary files containing information to allow the appropriate executable (CellPhoneConnector,exe) to be compiled.

These exemplary software files are as follows:

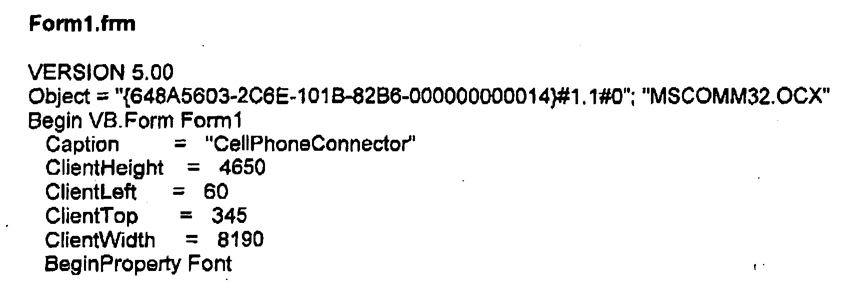

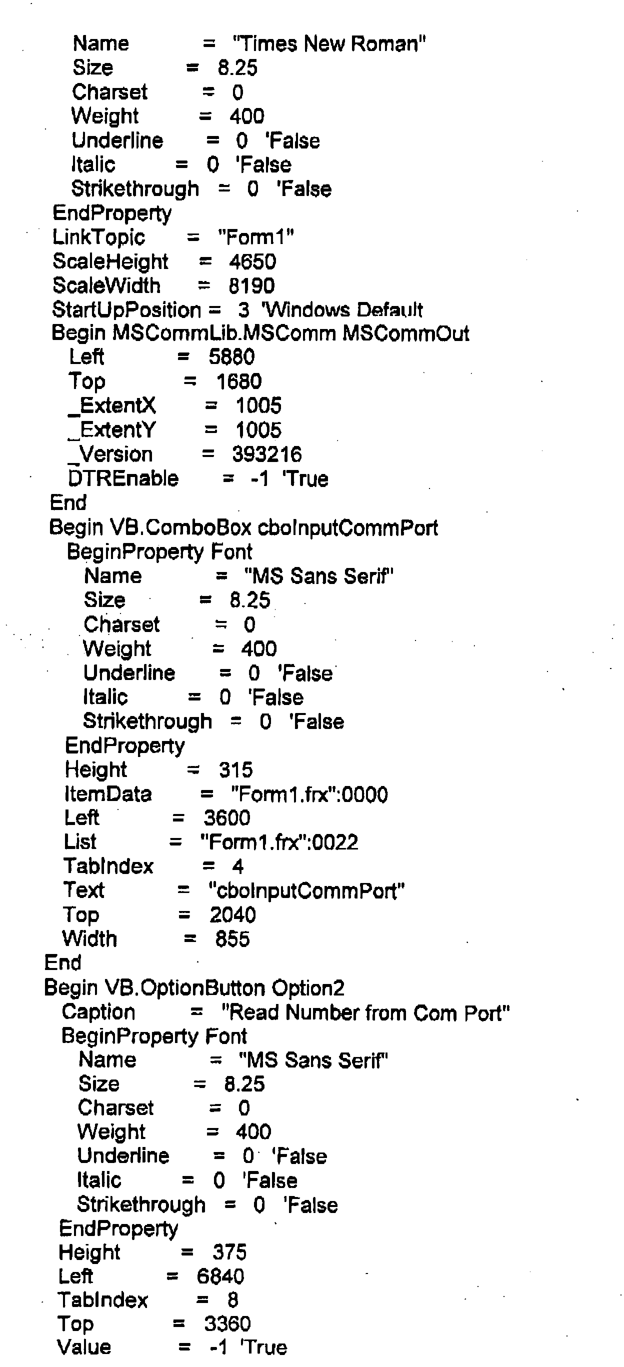

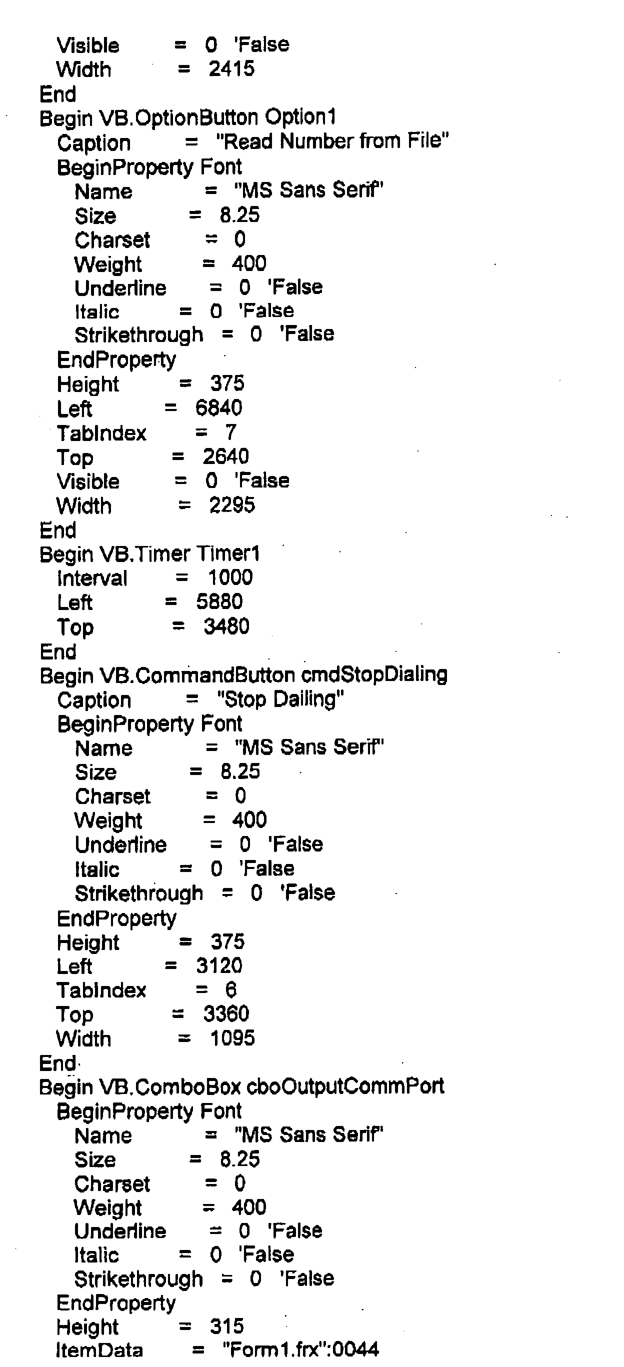

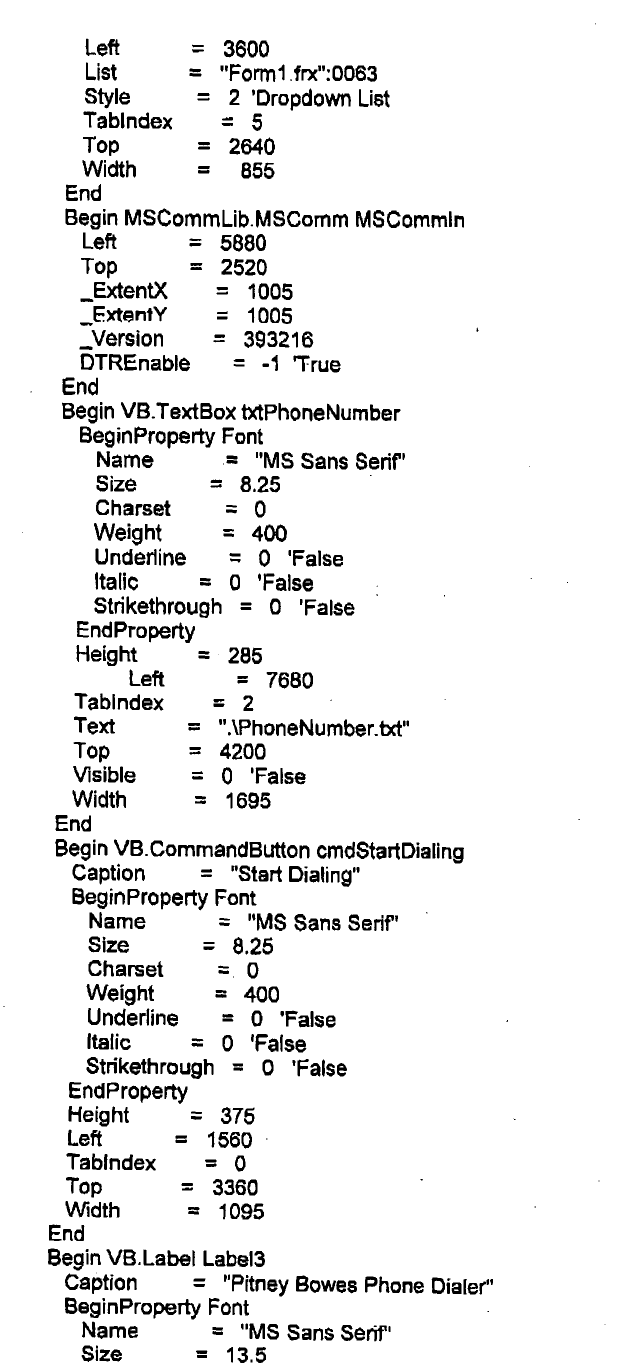

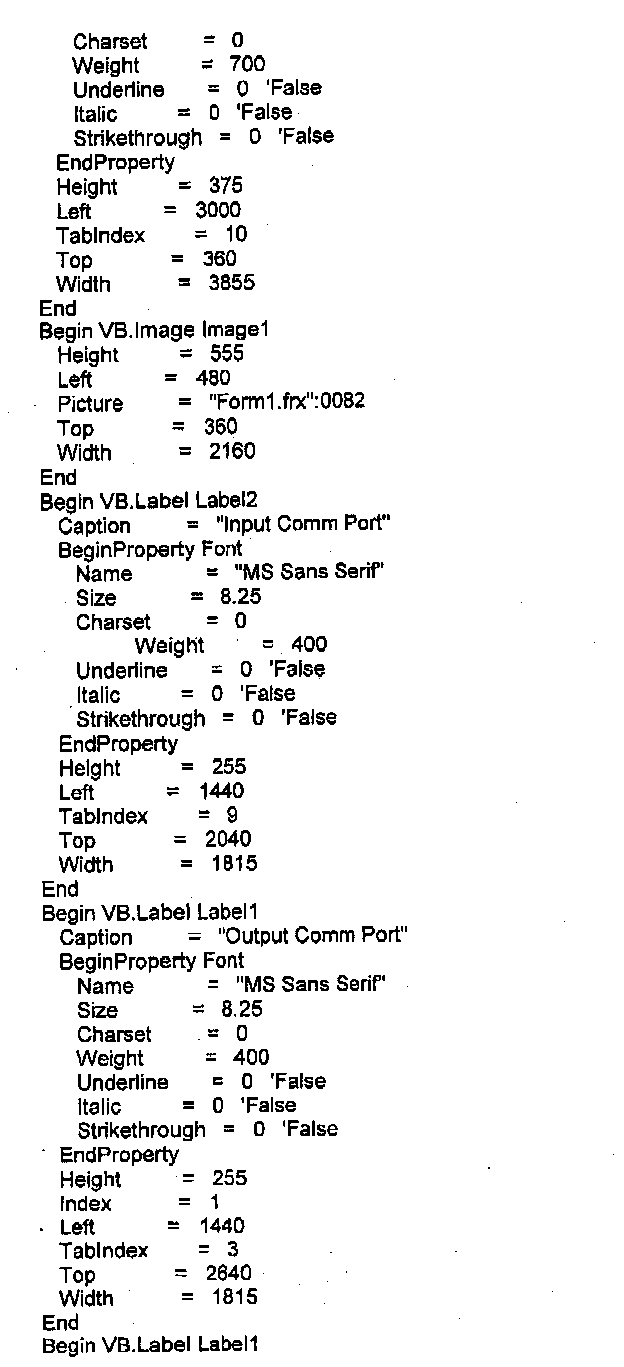

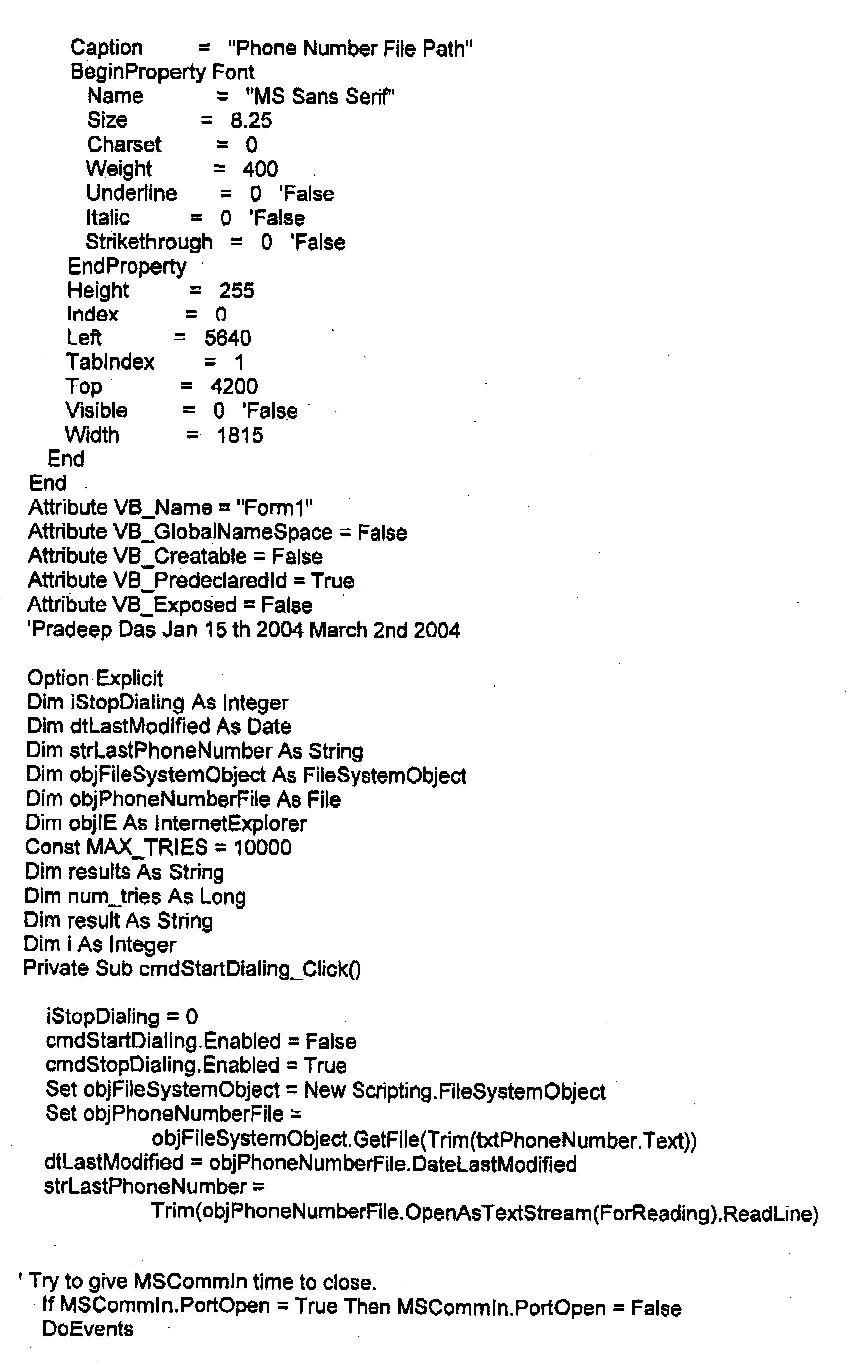

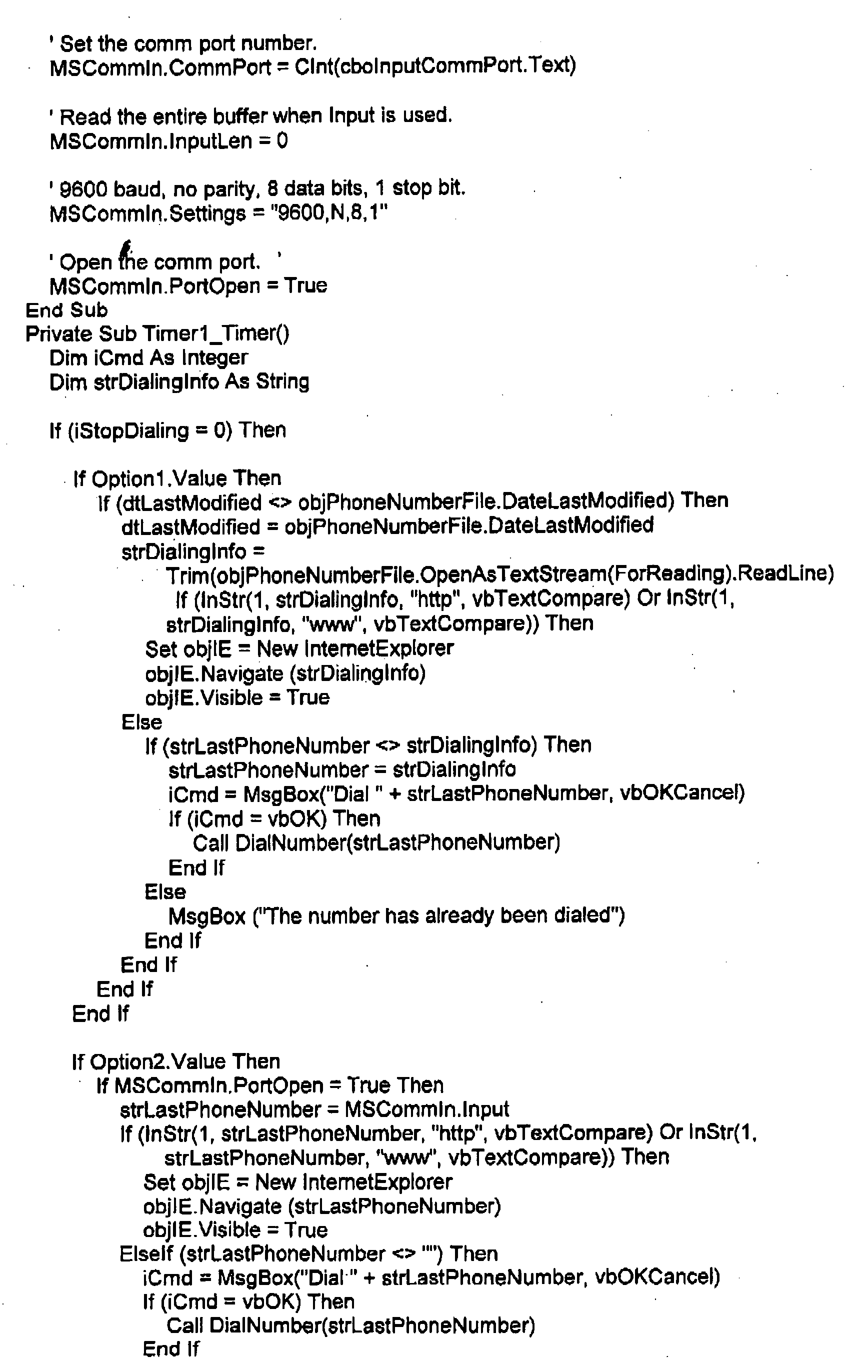

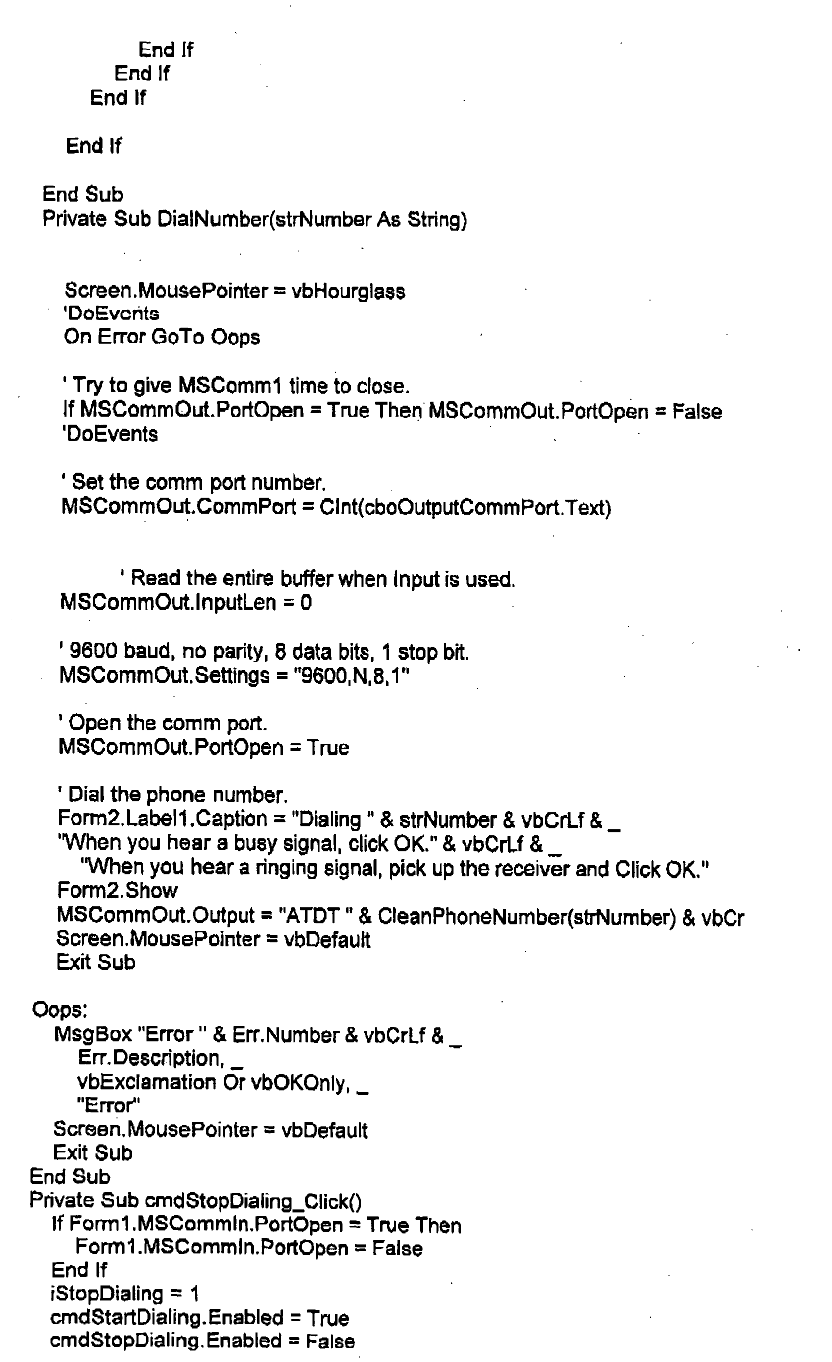

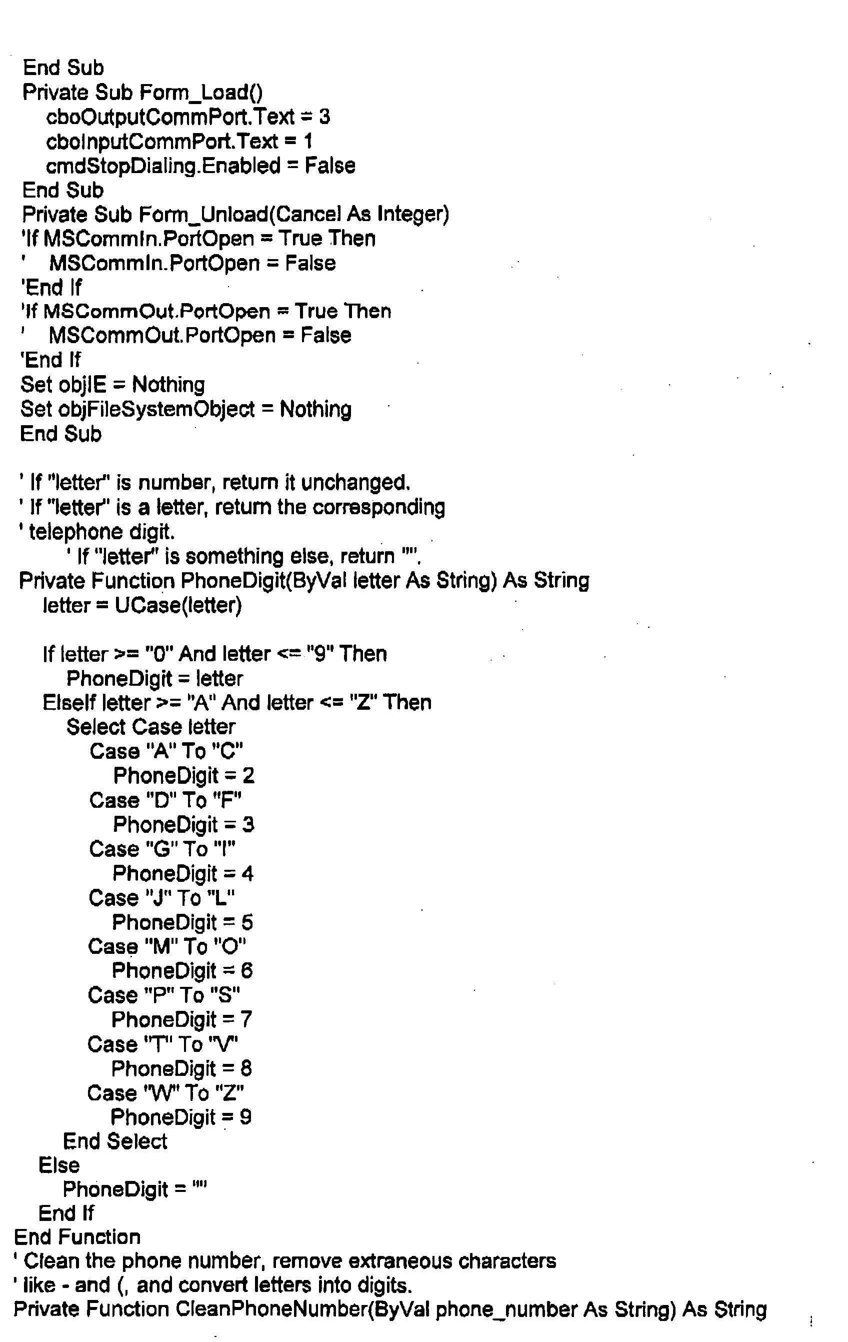

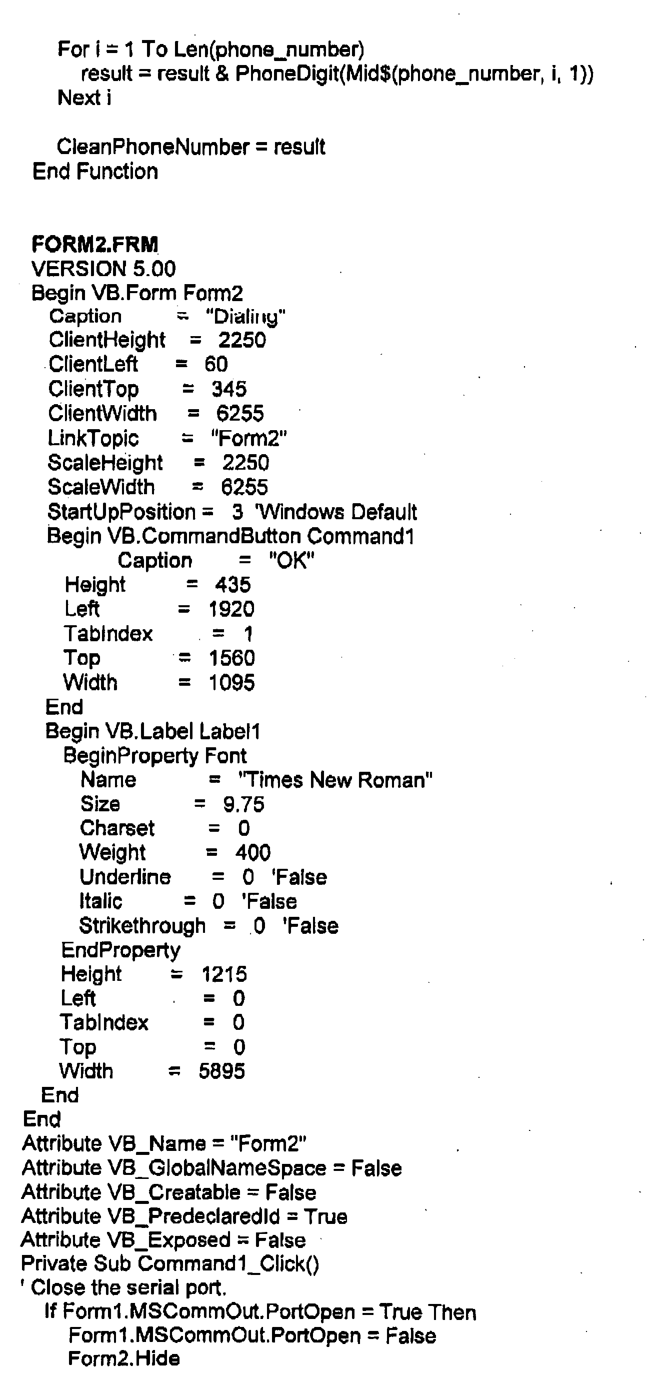

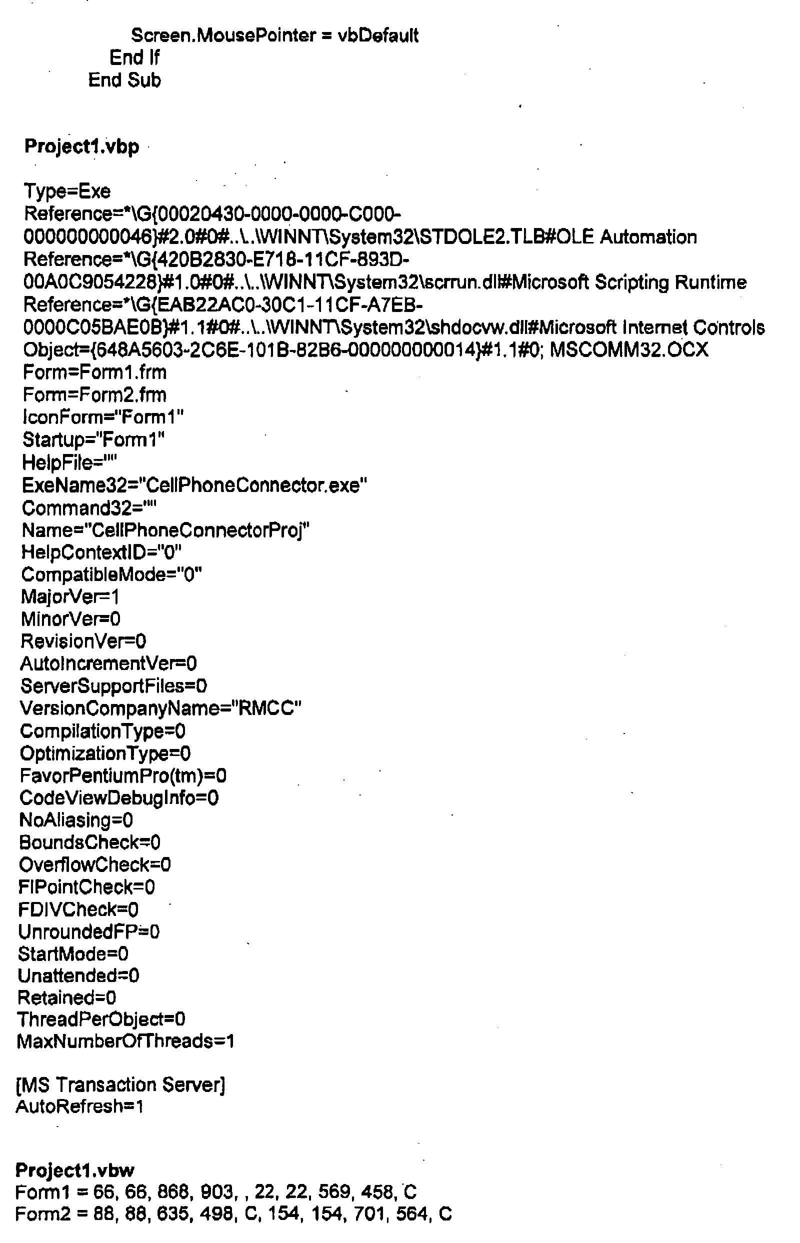

Although the invention has been described with respect to preferred embodiments thereof, it will be understood by those skilled in the art that the foregoing and various other changes, omissions and deviations in the form and detail thereof may be made without departing from the scope of this invention.

## Claims

**1.** A method for facilitating a transaction with a business entity from a printed medium using a mobile communications device, the printed medium having a barcode, the barcode including direct contact data for the business entity and transaction data relating to the transaction, the method comprising:
capturing a digital image of the barcode with the mobile communications device;
decoding the digital image in the mobile communications device to retrieve the direct contact data and the transaction data;
initiating a communication with the business entity via the mobile communications device using the decoded direct contact data; and
transmitting the transaction data to the business entity to facilitate the transaction

**2.** The method of claim 1 further including the step of authenticating the transaction with a digital signature associated with the transaction.

**3.** The method of claim 2 wherein the digital signature is included in the barcode and the step of decoding the digital image include decoding the digital signature, and the step of authenticating includes performing the authentication of the digital signature prior to initiating the communication.

**3.** The method of claim 2 further comprising a step of receiving the digital signature from the business entity after initiating the communication.

**5.** The method of claim 2 wherein the digital signature is created using a private key and the step of authenticating the digital signature include using a corresponding public key stored in the mobile communications device to verify the digital signature.

**6.** The method of claim 2 further including a step of providing a warning if the step of authenticating includes not finding a valid digital signature,

**7.** The method of claim 6 further including a step of reporting data relating to transactions lacking the valid digital signature to a central authority.

**8.** The method of claim 1 further including the steps of:
storing user information in the mobile communications device; and
transmitting the user information to the business entity subsequent to initiating the communication, the user information facilitating the transaction.

**9.** The method of claim 1 wherein the mobile communications device is a cell phone having a digital camera and the step of capturing the digital image is done with the cell phone digital camera.

**10.** The method of claim 9 wherein the direct contact data is a phone number for the entity, and the step of initiating the communication comprises automatically dialing the decoded phone number.

**11.** The method of claim 1 wherein the direct contact data is a web address for the entity, and the step of initiating the communication comprises automatically contacting the web address.

**12.** The method of claim 1 wherein the transaction data includes an identifier of a unique offer associated with the printed medium, and further including a step of the business entity initiating a transaction routine for the unique offer upon receiving the transaction data.

**13.** The method of claim 12 wherein the transaction data further includes an identification of the printed medium from which the transaction data was retrieved, and further including a step of the business entity tracking printed medium sources of incoming communications.

**14.** The method of claim 1 further including, after initiating the communication, steps of:
receiving a transaction query at the mobile communications device from the business entity; and
transmitting response data responsive to the transaction query to the business entity, said response data being input by a user of the mobile device.

**15.** A method for facilitating a transaction with a business entity from a printed medium using a mobile communications device, the method comprising:
printing a barcode on the medium, the barcode including direct contact data for the business entity and transaction data relating to the transaction;
receiving communications at the business entity through a communication channel identified by the direct contact data;
receiving the transaction data through the communication channel;
processing the transaction based on the transaction data received through the communication channel

**16.** The method of claim 15 further including the step of providing a digital signature relating to the transaction authenticating the identity of the business entity.

**17.** The method of claim 16 wherein the step of printing the barcode and the step of providing the digital signal include printing the digital signature in the barcode.

**18.** The method of claim 16 wherein the step of providing the digital signature further includes transmitting the digital signature through the communication channel.

**19.** The method of claim 16 wherein the digital signature is created using a private key whereby a corresponding public key can verify the digital signature.

**20.** The method of claim 15 wherein the step of receiving transaction data further includes receiving user information, the user information facilitating the transaction.

**21.** The method of claim 15 wherein the direct contact data is a web address for the entity, and the step of receiving communications comprises maintaining the web address, and receiving communications at the web address.

**22.** The method of claim 15 wherein the transaction data includes an identifier of a unique offer associated with the printed medium, and further including a step of initiating a transaction routine for the unique offer upon receiving the transaction data,

**23.** The method of claim 22 wherein the transaction data further includes an identification of the printed medium from which the transaction data was retrieved, and further including a step of the business entity tracking printed medium sources of incoming communications.

**24.** The method of claim 15 wherein the step of processing the transaction further includes:
transmitting a transaction query from the entity requesting further details regarding the transaction; and
receiving response data responsive to the transaction query, said response data being input by a remote user.

**25.** A method for facilitating a transaction with a business entity from a printed medium using a mobile communications device, the method comprising:
receiving data pertaining to the business entity and a proposed transaction at a trusted third party;
verifying the data, including verifying the source of the data as the business entity, at the trusted third party; and
providing an authentication means to the mobile communications device whereby barcode information printed by the business entity can be authenticated.

**26.** The method of claim 25 wherein the step of providing the authentication means further comprises:
generating a digital signature for the data using a private encryption key at the trusted third party;
generating the barcode including the data and the digital signature; and
providing a public encryption key to mobile communication device providers for authenticating the digital signal encrypted with the private encryption key.

**27.** The method of claim 25 wherein the step of providing the authentication means further comprises:
receiving a request to authenticate the data from the mobile communication device; and
providing to the mobile communication device an indication of the authenticity of the data.
